# FASCICULE DE BREVET EUROPEEN

(11) **EP 1 838 438 B1**
(45) Date de publication et mention de la délivrance du brevet: **10.12.2014**
(21) Numéro de dépôt: 06709131.4
(22) Date de dépôt: 19.01.2006
(51) Int. Cl.: B01J 21/04, B01J 23/85, B01J 23/882, B01J 31/02, B01J 37/02, C10G 45/04, B01J 23/88, B01J 23/94, B01J 38/52, B01J 37/20, C10G 45/08

(54) **CATALYSEUR D'HYDROTRAITEMENT, SON PROCEDE DE PREPARATION ET SON UTILISATION**
HYDRIERUNGSKATALYSATOR, DESSEN HERSTELLUNG UND VERWENDUNG
HYDROPROCESSING CATALYST, PREPARATION METHOD THEREOF AND USE OF SAME

(30) Priorité: 20.01.2005 FR 0500579
(43) Date de publication de la demande: 03.10.2007
(73) Titulaire: Total Raffinage France, 92400 Courbevoie (FR); IFP Energies nouvelles, 92852 Rueil-Malmaison Cedex (FR)
(72) Inventeur: CHOLLEY, Thierry, B-1180 Bruxelles (BE); DATH, Jean-Pierre, B-7970 Beloeil Hainault (BE); BRUN, Claude, F-64320 Idron (FR); FREMY, Georges, F-64390 Sauveterre de Bearn (FR); HUMBLOT, Francis, F-64300 Lanneplaa (FR)
(74) Mandataire: Largeau, Béatrice
(86) Numéro de dépôt international: PCT/FR2006/000126
(87) Numéro de publication internationale: WO 2006/077326

(56) Documents cités:
- EP-A- 1 046 424
- WO-A-2004/091789

## Description

La présente invention concerne un catalyseur d'hydrotraitement, son procédé de préparation et l'utilisation de ce catalyseur dans un procédé d'hydrotraitement et/ou d'hydrocraquage d'hydrocarbures, notamment d'hydrocarbures issus de coupes pétrolières de domaine d'ébullition compris entre 40 et 560°C.

Actuellement, la demande en composés hydrocarbonés désulfurés, déazotés et déaromatisés s'accroît et les fabricants développent des catalyseurs de plus en plus efficaces vis-à-vis de la purification des hydrocarbures. Cependant, ces nouveaux catalyseurs sont beaucoup plus coûteux et ne sont accessibles qu'auprès d'un nombre limité de producteurs. En outre, dès leur première régénération, ces catalyseurs présentent une activité souvent bien inférieure à leur activité initiale à l'état neuf dans les mêmes conditions opératoires. Un traitement supplémentaire de réactivation spécifique permet parfois de retrouver une activité proche de l'activité initiale et autorise ainsi la réutilisation du catalyseur pour un nouveau cycle d'hydrodésulfuration profonde et la production de distillats ayant des teneurs en soufre inférieures à 10 ppm. Plusieurs traitements de réactivation sont proposés sur le marché. Ils combinent généralement des étapes de régénération dans des conditions particulières, des traitements chimiques et thermiques et peuvent être associés à des sulfurations ex situ du catalyseur.

Aujourd'hui, de nombreux catalyseurs « classiques », à base de supports en oxyde(s) réfractaire(s) et contenant une combinaison de métaux des groupes VIB et VIII sont utilisés en raffinerie, à l'état neuf ou régénéré, soit en hydrotraitement, soit en hydrocraquage. S'il s'avère impossible d'augmenter notablement leur activité en désulfuration et/ou en déazotation, ces catalyseurs devront être récupérés, stockés ou détruits, lorsque les spécifications imposées aux carburants deviendront si restrictives qu'il ne sera plus possible de les utiliser. Ce stockage ou cette élimination de solides pourraient en outre être soumis à des contraintes environnementales et de sécurité et engendrer des surcoûts importants pour les raffineurs.

La Demanderesse a donc cherché, premièrement, à rendre plus efficaces des catalyseurs connus à base d'oxyde(s) réfractaire(s) et de métaux des groupes VIB et VIII, et de leur conférer des activités en désulfuration et en déazotation au moins équivalentes à celles des meilleurs catalyseurs du marché, et, deuxièmement, à améliorer l'activité de catalyseurs d'hydrotraitement régénérés afin d'augmenter le nombre de cycles de recyclage et de retarder leur mise au rebut et leur destruction.

Tous les catalyseurs d'hydrotraitement ou d'hydrocraquage contenant les métaux à l'état d'oxydes, pour être actifs, doivent nécessairement être sulfurés avant utilisation. Cette sulfuration peut être faite soit in situ dans le réacteur d'hydrotraitement de la raffinerie, soit ex situ. La sulfuration peut être réalisée au moyen de sulfure d'hydrogène, de mercaptans, de sulfures organiques, de polysulfures et/ou de soufre élémentaire, ces composés étant introduits seuls, en mélange avec un solvant ou en même temps que la charge.

Avant cette étape de sulfuration, certains de ces catalyseurs sont préalablement modifiés par un traitement avec des composés organiques.

La sulfuration et la modification préalable peuvent se faire in situ, c'est-à-dire dans le réacteur d'hydrotraitement/hydroconversion, ou bien ex situ, c'est-à-dire dans un réacteur dédié. On peut également envisager une modification préalable ex situ combinée à une sulfuration in situ dans le réacteur d'hydrotraitement/hydroconversion.

La gamme des composés organiques utilisables est assez large. Il est ainsi connu de modifier ces catalyseurs au moyen d'acides de type thioglycolique ou encore de thioalcools, de composés thioacétoniques et de thiodiazoles ou encore de thiocyanates tels que proposés notamment par les demandes suivantes : EP 289211, EP 300629, EP 338788 , EP 357295, EP 456592, EP 478365 et EP 506206. D'autres catalyseurs ont été modifiés par traitement avec des composés organiques alcool-acides (EP 482817), de mono-, di- ou polyalcools éventuellement étherifiés (EP 601722, US 3954673, US 4012340, WO 01/76741), de composés de types urée, polyamines, EDTA, hydrazine et autres composés azotés (EP 181035, EP 335754, EP 1043069, WO 01/76741, US 3954673 et US 4012340). Des catalyseurs modifiés avec des monoesters en C₂₋₁₄ sont décrits dans les demandes de brevet EP 466 568 et EP 1046424.

Des catalyseurs ont également été modifiés par l'acide orthophtalique, l'anhydride phtalique ou un orthophtalate (WO2004/091789).

Tous ces composés visent à améliorer l'efficacité des catalyseurs en hydrotraitement, plus particulièrement en hydrodésulfuration. Cependant ces modifications ne permettent pas toujours d'accroître suffisamment les performances du catalyseur pour faire face aux spécifications concernant les teneurs en soufre des carburants qui ne cessent de devenir de plus en plus contraignantes pour les raffineurs. Ainsi par exemple, selon les directives du parlement européen et du conseil européen, les pays de la Communauté Européenne doivent produire du carburant diesel contenant moins de 50 ppm de soufre à partir de 2005 et moins de 10 ppm à l'horizon 2008 - 2011 alors que la norme 2004 est de 350 ppm. De même, pour tous les pays d'Amérique du Nord, la teneur en soufre du diesel devra passer de 500 ppm à 15 ppm à partir de 2006. Certains pays comme l'Allemagne devancent la législation européenne et imposent d'ores et déjà la vente de diesel à moins de 10 ppm. Des contraintes similaires s'appliquent déjà sur l'essence et les autres carburants. Cette évolution des spécifications impose des contraintes sur la production des raffineries, contraintes auxquelles les raffineurs doivent se plier au prix d'investissements souvent importants sur les unités d'hydrotraitement ou d'hydrocraquage et/ou, de façon beaucoup plus économique, grâce à l'amélioration des performances en désulfuration des catalyseurs actuels et la possibilité de les recycler plusieurs fois à leur plus haut niveau de performance.

Dans ce but, la Demanderesse a conçu un nouveau type de catalyseur d'hydrotraitement, à base d'oxydes réfractaires et de métaux des groupes VIB et VIII de la classification périodique des éléments, qui présente, après sulfuration, une activité fortement améliorée en désulfuration ainsi qu'en déazotation.

Un catalyseur d'hydrotraitement, comprenant un support à base d'au moins un oxyde réfractaire, au moins un métal du groupe VIII et au moins un métal du groupe VIB de la Classification Périodique des Eléments, est caractérisé en ce qu'il comprend en outre au moins un composé organique, comportant au moins deux fonctions ester carboxylique, de formule (I) 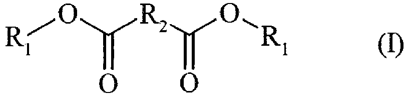 dans laquelle
chaque R₁ représente indépendamment un groupe alkyle en C₁₋₁₈, alcényle en C₂₋₁₈, aryle en C₆₋₁₈, cycloalkyle en C₃₋₈, alkylaryle ou arylalkyle en C₇₋₂₀, ou les deux groupes R₁ forment, conjointement, un groupe divalent en C₂₋₁₈, et R₂ représente un groupe alkylène en C₁₋₁₈, arylène en C₆₋₁₈, cycloalkylène en C₃₋₇, ou une combinaison de ceux-ci,
la chaîne carbonée des groupes hydrocarbonés représentés par R₁ et R₂ pouvant contenir ou porter un ou plusieurs hétéroatomes choisis parmi N, S et O, et chacun des groupes R₁ et R₂ pouvant porter un ou plusieurs substituants de formule -C(=O)O-R₁ ou -O-C(=O)-R₁ où R₁ a la signification indiquée ci-dessus.

Selon l'invention telle que revendiquée, le composé organique de formule (I) est un succinate de dialkyle en C₁₋₄.

En effet, la Demanderesse a établi que la présence sur les catalyseurs d'au moins un composé organique de formule (I) tel que défini dans la revendication 1 augmentait l'efficacité en désulfuration et en déazotation des catalyseurs, après activation par sulfuration dans des conditions connues. En utilisant ces nouveaux catalyseurs pour l'hydrotraitement d'hydrocarbures, on arrive, en comparaison à des catalyseurs équivalents n'ayant subi aucune modification préalable, à abaisser la température de réaction de désulfuration d'environ 5 à 20 °C, pour une teneur résiduelle de soufre donnée et toutes conditions opératoires étant identiques par ailleurs (pression, quantité d'hydrogène et vitesse spatiale horaire (WH)). Un tel gain d'activité permet d'envisager l'obtention de teneurs résiduelles en soufre nettement inférieures à 50 ppm, voire inférieures à 10 ppm, dans les hydrocarbures traités, en faisant varier les conditions opératoires. Si l'unité est déjà en mesure de produire une coupe pétrolière à basse teneur en soufre, ce gain d'activité permettra de réduire la température du réacteur pour produire la teneur en soufre voulue, et de maintenir ainsi l'unité en service pour une durée supplémentaire pouvant atteindre plusieurs mois.

La formule (I) du composé organique englobe des composés comportant deux, trois ou quatre fonctions ester, voire plus. Dans un mode de réalisation préféré du catalyseur selon l'invention les résidus R₁ et R₂ ne comportent généralement pas d'autres substituants esters et le composé organique de formule (I) est un diester.

Le nombre d'atomes de carbone séparant les deux groupes >C=O des formules (I) est de préférence égal à 1, 2 ou 4, et en particulier égal à 1 ou 2.

On peut citer à titre d'exemples de composés de formule (I), les ortho-phtalates d'alkyle, les isophtalates d'alkyle, les téréphtalates d'alkyle, les esters d'acide malonique, d'acide adipique, d'acide glutarique, la 1,6-dioxacyclodécane-2,5-dione, le 2-(methoxymethyl)-succinate de dimethyle, l'itaconate de dibutyle, le 2,3-diacetylsuccinate de diethyle, le cyclohexane-1,4-dicarboxylate de dimethyle, le 3,3'-dithiodipropionate de dimethyle.

Selon l'invention, le composé de formule (I) est un succinate de dialkyle en C₁₋₄, de préférence le succinate de diméthyle.

De préférence, le catalyseur non modifié, connu en soi, est un catalyseur constitué d'un support d'oxyde réfractaire de type alumine, silice ou silice-alumine contenant de 0,1 à 10 % en poids d'au moins un métal du groupe VIII, de préférence du nickel et/ ou du cobalt, et de 1 à 20% en poids d' au moins un métal du groupe VIB, de préférence du molybdène.

Le catalyseur peut être un catalyseur frais, c'est-à-dire non régénéré, provenant directement d'un fabricant, mais le prétraitement selon l'invention par un ou plusieurs composé de formule (I) tel que défini dans la revendication 1 est également intéressant lorsqu'il s'agit d'un catalyseur régénéré, généralement par un traitement chimique ou thermique approprié, par exemple par calcination.

Il est néanmoins connu que certains catalyseurs frais, du fait d'un mode de préparation spécifique, peuvent être plus ou moins réfractaires aux traitements préconisés. De la même manière, pour les mêmes raisons ou suite à des conditions opératoires particulières subies dans l'unité, les catalyseurs régénérés peuvent s'avérer plus ou moins réfractaires à ces traitements.

Le catalyseur selon l'invention contient de préférence au moins 0,001 mole de composé(s) organique(s) de formule (I), en particulier de 0,001 mole à 10 moles, de préférence de 0,01 à 6 moles et de façon encore plus préférée de 0,1 à 3 moles de composé(s) de formule (I) par mole de métaux des groupes VIB et VIII.

L'invention a également pour objet un procédé de préparation du catalyseur d'hydrotraitement modifié décrit ci-dessus selon la revendication 5. Ce procédé de modification comprend la mise en contact d'un catalyseur comprenant un support à base d'au moins un oxyde réfractaire, au moins un métal du groupe VIII à l'état d'oxyde, et au moins un métal du groupe VIB à l'état d'oxyde, avec au moins un composé organique de formule (I) 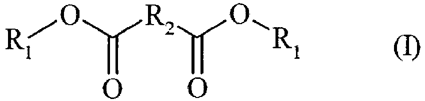 dans laquelle
le composé organique de formule (I) est un succinate de dialkyle en C₁₋₄.

Selon l'invention, la mise en contact est généralement et de préférence une imprégnation.

Lorsque le ou les composé(s) de formule (I) est (sont) liquide(s) à la température d'imprégnation, la mise en contact peut se faire en l'absence de solvant. La mise en contact du catalyseur non modifié avec le(s) composé(s) organique(s) de formule (I) se fait de préférence par mise en contact du catalyseur avec une solution contenant le ou les agent(s) organique(s). Le volume de solution peut être inférieur, égal ou supérieur au volume poreux du catalyseur. La méthode utilisant un volume de solution inférieur au volume poreux du catalyseur est parfois appelée « imprégnation à sec ». Lorsque le volume de solution est supérieur au volume poreux du catalyseur, l'excès de solution sera éliminé après l'adsorption du ou des composé(s) organique(s) de formule (I) sur le catalyseur.

La mise en contact du catalyseur avec le(s) composé(s) de formule (I) peut se faire en présence d'au moins un solvant.

Lorsque la mise en contact se fait en présence de solvant, le ou les composé(s) organique de formule (I) est (sont) de préférence au moins partiellement soluble(s) dans le solvant utilisé. Le choix du solvant revêt une importance particulière dans la mise en oeuvre du procédé. La sélection du solvant se base sur différents critères tels que son pouvoir solvant du ou des composés de formule (I), son effet dispersant du ou des composés de formule (I), son effet mouillant de la surface du catalyseur et sa disponibilité sur le marché à des conditions économiquement acceptables.

Parmi les solvants qu'on utilisera avantageusement dans l'invention, on peut citer l'eau, les fluides supercritiques tels que le dioxyde de carbone, les solvants aromatiques, aliphatiques, alicycliques, les coupes pétrolières, les solvants mono- et polyhydroxylés tels que l'éthanol, le tertio-butanol, l'éthylèneglycol, le diéthylèneglycol, le triéthylèneglycol, le propylèneglycol, le polyéthylèneglycol (PEG), le glycérol, les esters d'alkyle tel que l'acétate d'éthyle, les cétones tels que l'acétone ou la méthyléthylcétone, la N-métylpyrrolidone, les solvants contenant une fonction amide tels que le diméthylacétamide, les solvants contenant une fonction nitrile tel que l'acétonitrile, les carbonates d'alkyle tels que le carbonate d'éthyle, les éthers comme le tetrahydrofurane, des solvants soufrés comme le diméthylsulfoxide et le sulfolane, les acides comme l'acide acétique, et les solvants halogénés, ou un mélange de plusieurs de ces solvants.

Parmi ces solvants, on préfère en particulier l'eau, le toluène, les xylènes, l'éthylèneglycol, le diéthylèneglycol, le triéthylèneglycol, le glycérol, l'éthanol, le tertiobutanol, le polyéthylèneglycol (PEG), le plus souvent de poids moléculaire de 118 (le triéthylèneglycol) jusqu'à 1000, le white-spirit et l'éther de pétrole.

Le (ou les) composé(s) organique(s) de formule (I) peu(ven)t éventuellement être introduit(s) en présence d'au moins un acide, généralement choisi parmi les acides carboxyliques, les acides hydrocarboxyliques et les polyacides (tels que les acides formique, acétique, glycolique, lactique, tartrique, maléique, citrique, glycérique, gluconique, methoxy-acétique, ethoxy-acétique, malonique, L(+) ascorbique, salicylique, oxalique, orthophtalique, succinique, glyoxylique...), les acides thiocarboxyliques (tels que les acides thiobenzoique, mercapto acétique, 1 et 2 mercapto-propionique, 2-3 dimercapto succinique, mercapto succinique, thioacétique, thioglycolique, thiodiglycolique, dithiodiglycolique...), les acides aminocarboxyliques (acide nitrilotriacétique, l'EDTA(acide tétracétique éthylènediamine diammonium). Parmi ces acides, les acides particulièrement préférés sont les acides lactique, maléique, tartrique, citrique, succinique, oxalique, thioacétique, thioglycolique, nitriloacétique, et l'EDTA.

Le ou les acides peuvent être introduits avec le (ou les) composé(s) de formule (I), ou séparément, si, par exemple, le mélange obtenu n'est pas homogène. Dans ce cas, il peut être avantageux d'utiliser un solvant permettant l'introduction simultanée du ou des acides avec les composés de formule (I) le solvant assurant alors la dissolution de tous les composés organiques présents. Enfin, il est également possible lorsque le ou les acides sont introduits séparément (avant ou après, de préférence avant), du composé de formule (I) d'utiliser un solvant différent de celui employé pour introduire le composé de formule (I).

La mise en contact du catalyseur, optionnellement préalablement séché entre 10 et 600°C, de préférence entre 15 et 300°C, et de manière plus préférentielle de 20 à 180°C, avec une solution d'un ou plusieurs composés de formule (I) lors de l'étape d'imprégnation peut durer de 1 minute à 7 jours, de préférence au moins 10 minutes à 8 heures, à une température comprise entre 0 °C et 200°C, de préférence à température ambiante, à une faible pression comprise entre la pression atmosphérique et 5 bars, de préférence à pression atmosphérique. Dans le cas où une solution d'acide(s) est introduite avant la solution de composé(s) organique(s) de formule (I), les conditions opératoires de l'imprégnation avec le ou les acides sont similaires à celles de l'imprégnation avec le ou les composés organiques de formule (I). Dans le cas optionnel où le catalyseur est séché, on peut avantageusement profiter de la chaleur résiduelle du catalyseur pour pratiquer une imprégnation à chaud.

A la fin de l'étape d'imprégnation, le catalyseur peut être soumis, éventuellement après élimination d'un excès de solution d'imprégnation, à une étape de maturation optionnelle à une température généralement de 0 à 100°C, de préférence de la température ambiante (environ 20°C) à 80°C, généralement à pression atmosphérique ou jusqu'aux pressions généralement mise en oeuvre dans les procédés d'hydrotraitement ou d'hydroconversion, dont la durée peut être comprise entre quelques minutes et quelques années, dans le cas où le catalyseur resterait stocké en fûts. De préférence, l'étape de maturation peut durer de quelques minutes à 2 jours. Un traitement thermique optionnel, consécutif à l'étape de maturation, peut être effectué à des températures de 50°C à 250°C, de préférence de 60 à 180°C, de durée de quelques minutes à plusieurs jours, de préférence de 30 minutes à 3 heures sous atmosphère inerte ou non, avec ou sans débit gazeux, généralement à pression atmosphérique ou jusqu'aux pressions généralement mises en oeuvre dans les procédés d'hydrotraitement ou d'hydroconversion.

Les étapes optionnelles de maturation et de traitement thermique peuvent éventuellement être omises lorsque le catalyseur est chargé directement dans l'unité d'hydrotraitement ou d'hydroconversion.

Le catalyseur modifié par imprégnation avec le ou les composés de formule (I) est parfaitement stable à température ambiante et à l'air. La modification du catalyseur peut par conséquent se faire *ex situ,* c'est-à-dire en dehors d'un réacteur d'hydrotraitement, généralement d'hydroconversion, et il s'agit là d'un mode de réalisation préféré du procédé selon l'invention. La mise en oeuvre *ex situ* du procédé selon l'invention peut éventuellement être combinée à une sulfuration *ex situ* du catalyseur modifié selon l'invention. Ceci permet au raffineur d'acheter un produit immédiatement prêt à l'emploi et de réduire le plus possible les pertes de temps au démarrage de l'unité.

Il est également intéressant de réaliser l'étape de modification du catalyseur par le ou les composés de formule (I) ex situ, et de sulfurer le catalyseur modifié *in situ* dans le réacteur d'hydrotraitement. Dans ce cas, la mise en place du catalyseur dans l'unité de traitement est plus aisée car le catalyseur non sulfuré, contrairement au catalyseur sulfuré, ne risque pas de s'auto-enflammer.

Une autre variante encore consiste à mettre en oeuvre a la fois la modification du catalyseur et la sulfuration consécutive *in situ.* Dans ce cas, le procédé de préparation selon l'invention est caractérisé par le fait que la mise en contact du catalyseur avec le(s) composé(s) de formule (I) se fait en présence d'hydrogène et d'au moins un agent de sulfuration choisi de préférence parmi l'hydrogène sulfuré, le soufre élémentaire, le CS2, les mercaptans, les sulfures et/ou polysulfures, les coupes hydrocarbonées à point d'ébullition inférieur à 400 °C contenant des composés soufrés, généralement au sein d'un réacteur d'hydrotraitement.

Il convient de noter que, même lorsque la modification du catalyseur par le ou les composés de formule (I) se fait (se font) *in situ* dans le réacteur d'hydrotraitement, ces deux opérations constituent généralement deux étapes distinctes réalisées l'une après l'autre, la mise en contact avec le ou les composés de formule (I) précédant toujours l'étape de sulfuration. Mais ces deux étapes peuvent aussi être conduites simultanément.

Outre l'imprégnation des composés organiques dans les pores d'un catalyseur frais ou régénéré, il est également possible d'introduire lesdits composés organiques au cours de la fabrication/mise en forme du catalyseur. On peut par exemple incorporer le ou les composés organiques de formule (I) au support avant même le dépôt des composés des métaux des groupes VIB et VIII. Ceci peut être fait par mélange d'un ou de plusieurs composés organiques avec les composants du support avant la mise en forme de celui-ci, ou encore par imprégnation du support mis en forme avec les composés organiques.

Une autre possibilité consiste à introduire le ou les composés organiques et les composés des métaux des groupes VIB et VIII simultanément, soit en les mélangeant aux composants du support avant mise en forme, soit par imprégnation d'un support déjà mis en forme avec à la fois le ou les composés organique et les sels des métaux des groupes VIB et VIII. L'une ou l'autre des opérations peut être suivie d'un séchage, réalisé dans des conditions telles qu'une partie au moins des composés organiques soit conservé dans le catalyseur.

Il est également possible d'incorporer le ou les composés organiques de formule (I) seulement après les sels des métaux des groupes VIB et VIII. L'une ou l'autre de ces étapes peut éventuellement être suivie d'un séchage et/ou d'une calcination, dans des conditions telles qu'une partie au moins des composés soit conservée dans le catalyseur.

Le ou les composés organiques de formule (I) peuvent être introduits dans le catalyseur sous forme liquide et/ou solide particulaire et/ou encore sous forme de solution ou suspension dans un solvant approprié.

L'invention a en outre pour objet un procédé d'activation *in situ* ou *ex situ* d'un catalyseur d'hydrotraitement tel que décrit ci-dessus. Cette activation se fait par mise en présence du catalyseur, simultanément ou successivement, avec de l'hydrogène et au moins un agent de sulfuration choisi de préférence parmi l'hydrogène sulfuré, le soufre élémentaire, le CS₂, les mercaptans, les sulfures et/ou polysulfures, les coupes hydrocarbonées à point d'ébullition inférieur à 400 °C contenant des composés soufrés. Un agent de sulfuration préféré est le disulfure de diméthyle (DMDS).

L'agent de sulfuration peut être introduit sous forme de gaz ou sous forme diluée dans un solvant, ou comme additif de la charge à hydrotraiter.

L'invention a enfin pour objet l'utilisation du catalyseur ainsi activé *in situ* ou *ex situ,* pour l'hydrotraitement et/ou l'hydrocraquage d'hydrocarbures, en particulier d'hydrocarbures issus de coupes pétrolières de point d'ébullition compris entre 40 et 560°C.

Les exemples donnés dans la suite de la présente description visent à illustrer et non à limiter l'invention.

### EXEMPLE I

Dans le présent exemple, on décrit un mode de préparation des catalyseurs selon l'invention, ces catalyseurs étant ensuite utilisés dans l'exemple III.

On part d'un catalyseur commercial (catalyseur A), constitué d'une combinaison à 3 % en poids de cobalt et à 10 % en poids de molybdène supporté sur alumine, disponible sur le marché et utilisé communément par les raffineurs dans les unités d'hydrodésulfuration.

La modification de ce catalyseur A par un composé de formule (I) se fait de la manière suivante : 200 g du catalyseur A sont placés dans le ballon d'un évaporateur rotatif mis en rotation à 45 tours par minute. Une solution constituée de 53,3 g de succinate de diméthyle dissous dans 66 ml de toluène est injectée en 35 minutes au coeur du catalyseur. Le solide imprégné est laissé pendant 16 heures en rotation lente (20 tours par minutes) avant d'être soumis à une pression réduite, égale à 2700 Pa, et une température de 50°C pendant 30 minutes. Après évaporation de la majeure partie du toluène on obtient un catalyseur d'apparence sèche.

Après 115 jours à température ambiante, on charge 100 ml de ce catalyseur dans un réacteur d'une unité pilote de désulfuration de gazole en vue de la réalisation d'un test d'activité tel que décrit dans l'exemple III. Après chargement, le catalyseur subit un traitement thermique à 180 °C pendant 2 heures, puis un autre traitement thermique à 150 °C pendant 14 heures, le tout sous un courant d'azote de 20 l/h. Le catalyseur ainsi obtenu est appelé catalyseur B.

### EXEMPLE II

Dans le présent exemple, on décrit un mode de préparation du catalyseur selon l'invention en l'absence de solvant. Ce catalyseur est ensuite utilisé dans l'exemple III.

100 g du catalyseur A sont placés dans le ballon d'un évaporateur rotatif puis mis en rotation à 45 tours par minute. 54,8 g de succinate de diméthyle sont injectés en 12 minutes au coeur du catalyseur. Le solide imprégné est alors chauffé à 50°C pendant 30 minutes pour accélérer la dispersion du liquide dans le catalyseur.

Après 49 jours de stockage à température ambiante, on charge 100 ml de ce catalyseur dans le réacteur de l'unité pilote de désulfuration de gazole en vue de la réalisation du test d'activité décrit dans l'exemple III. Le catalyseur subit un traitement thermique à 150°C pendant 16 heures sous un courant d'azote de 20 l/h. Ce catalyseur selon l'invention est appelé catalyseur C.

### EXEMPLE III

Chacun des catalyseurs B et C (selon l'invention) est sulfuré par un gazole additivé à 2 % en poids de disulfure de diméthyle (DMDS) selon la procédure recommandée par le fabricant du catalyseur A.

Dans le présent exemple, on compare l'activité des catalyseurs B et C ayant subi une modification selon l'invention (Exemple I et II) à celle du catalyseur A n'ayant subi aucun traitement de modification.

Après sulfuration et stabilisation des trois catalyseurs A, B et C, on introduit une charge comprenant un mélange de 70 % en poids de gazole et 30 % en poids d'une coupe hydrocarbonée de type LCO *(Light Cycle Oil*) issue du craquage catalytique. Les caractéristiques de cette charge, avant hydrotraitement, sont indiquées dans le Tableau I ci-après.

**TABLEAU I**

| Type de charge | Mélange 30 % LCO-70 % gazole |
|---|---|
| Soufre (ppm) | 9074 |
| Densité à 15 °C (g/ml) | 0,8863 |
| Monoaromatiques (% en poids) | 20,7 |
| Diaromatiques (% en poids) | 21,3 |
| Triaromatiques (% en poids) | 3,8 |
| ∑ Aromatiques (% en poids) | 45,8 |
| Azote (ppm) | 389 |
| Distillation selon la norme ASTM D86 (°C) | |
| Point initial | 180 |
| 5 % vol | 224 |
| 50 % vol | 291 |
| 95 % vol | 360 |
| point final | 361 |

On met en oeuvre la réaction d'hydrotraitement sous une pression de 27.10⁵ Pa (27 bars) avec un rapport hydrogène/hydrocarbures (H₂/HC) de 250 Nl/l à une vitesse spatiale horaire (WH) de 1h⁻¹.

Pour comparer les activités en désulfuration, on ajuste, pour chaque catalyseur, la température réactionnelle à une valeur correspondant à un taux de désulfuration de 99 %. Plus cette température, pour les catalyseurs B et C selon l'invention est basse en comparaison à la température correspondante pour le catalyseur de référence A, plus ces catalyseurs sont actifs en désulfuration.

Les résultats obtenus sont représentés dans le tableau II sous forme d'écart de température (ΔT) par rapport à la température de référence du catalyseur A (T_{HDS}), correspondent à la température requise pour atteindre un taux de désulfuration de 99 %.

**TABLEAU II**

| Catalyseur | A | B | C |
|---|---|---|---|
| HDS | T_{HDS} | T_{HDS} - 7 °C | T_{HDS} - 7 °C |

On constate que les catalyseurs B et C selon l'invention permettent d'atteindre un taux de désulfuration de 99 % à une température inférieure de 7 °C à celle nécessaire pour le catalyseur A. Ils ont donc une activité en hydrodésulfuration nettement supérieure à celle du catalyseur A.

Pour comparer les activités en déazotation, on mesure, pour chaque catalyseur, la teneur résiduelle en azote pour une température réactionnelle (T_{HDN}) donnée. Plus cette teneur résiduelle en azote est basse, plus le catalyseur est actif en déazotation.

Les résultats obtenus sont représentés dans le tableau III.

**TABLEAU III**

| Catalyseur | A | B | C |
|---|---|---|---|
| Teneur résiduelle en azote à T_{HDN} (ppm) | 120 | 78 | 60 |

On constate que les catalyseurs B et C selon l'invention permettent d'abaisser plus fortement la teneur en azote résiduel que le catalyseur A, ce qui montre qu'ils sont également plus actifs en déazotation.

## Revendications

1. Catalyseur d'hydrotraitement, comprenant un support à base d'au moins un oxyde réfractaire, au moins un métal du groupe VIII et au moins un métal du groupe VIB de la Classification Périodique des Eléments, **caractérisé en ce qu'**il comprend en outre au moins un composé organique, comportant au moins deux fonctions ester carboxylique, de formule (I) 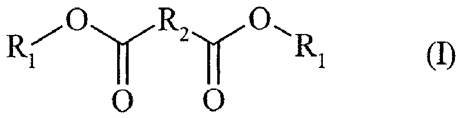 dans lequel le composé organique de formule (I) est un succinate de dialkyle en C₁₋₄.

2. Catalyseur selon la revendication 1, **caractérisé par le fait que** le composé organique de formule (I) est le succinate de diméthyle.

3. Catalyseur selon l'une des revendications 1 ou 2, **caractérisé en ce qu'**il comprend au moins 0,001 mole d'au moins un composé organique par mole de métaux des groupes VIB et VIII.

4. Catalyseur selon la revendication 3, **caractérisé en ce qu'**il comprend de 0,001 à 10 moles d'au moins un composé organique par mole de métaux des groupes VIB et VIII.

5. Procédé de préparation d'un catalyseur d'hydrotraitement selon l'une des revendications précédentes, comprenant la mise en contact d'un catalyseur comprenant un support à base d'au moins un oxyde réfractaire, au moins un métal du groupe VIII à l'état d'oxyde, et au moins un métal du groupe VIB à l'état d'oxyde, avec au moins un composé organique de formule (I) 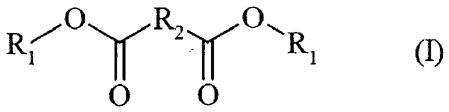 dans lequel le composé organique de formule (I) est choisi parmi un succinate de dialkyle en C₁₋₄.

6. Procédé de préparation selon la revendication 5, **caractérisé par le fait que** le catalyseur comprenant un support à base d'au moins un oxyde réfractaire, au moins un métal du groupe VIII à l'état d'oxyde , et au moins un métal du groupe VIB à l'état d'oxyde est un catalyseur régénéré.

7. Procédé de préparation selon la revendication 5 ou 6, tel que la mise en contact est suivie d'au moins une étape de maturation, à une température généralement de 0 à 100°C, dont la durée est comprise entre quelques minutes et quelques années, ladite étape de maturation étant éventuellement suivie d'au moins une étape de traitement thermique, à une température de 50 à 250°C, et de durée de quelques minutes à plusieurs jours.

8. Procédé de préparation selon l'une des revendications 5 à 7, **caractérisé par le fait que** la mise en contact du catalyseur avec le(s) composé(s) de formule (I) se fait en présence d'au moins un solvant et/ou d'au moins un acide.

9. Procédé de préparation selon la revendication précédente, **caractérisé par le fait que** le(s) composé(s) organique(s) de formule (I) est (sont) au moins partiellement soluble(s) dans le solvant utilisé.

10. Procédé de préparation selon la revendication 8 ou 9, **caractérisé par le fait que** le solvant est choisi parmi l'eau, le toluène et les xylènes, l'éthylèneglycol, le diéthylèneglycol, le triéthylèneglycol, le glycérol, l'éthanol, le tertiobutanol, le polyéthylèneglycol (PEG), le plus souvent de poids moléculaire de 118 (le triéthylèneglycol) jusqu'à 1000, le white-spirit et l'éther de pétrole.

11. Procédé de préparation selon l'une des revendications 5 à 10, **caractérisé par le fait que** la mise en contact du catalyseur avec le(s) composé(s) de formule (I) se fait ex situ, en dehors d'un réacteur d'hydrotraitement.

12. Procédé de préparation selon l'une des revendications 5 à 11, **caractérisé par le fait que** la mise en contact du catalyseur avec le(s) composé(s) de formule (I) se fait en présence d'hydrogène et d'au moins un agent de sulfuration choisi de préférence parmi l'hydrogène sulfuré, le soufre élémentaire, le CS2, les mercaptans, les sulfures et/ou polysulfures, les coupes hydrocarbonées à point d'ébullition inférieur à 400 °C contenant des composés soufrés, généralement au sein d'un réacteur d'hydrotraitement.

13. Procédé d'activation in situ ou ex situ d'un catalyseur d'hydrotraitement selon l'une quelconque des revendications 1 à 4, **caractérisé par le fait que** ledit catalyseur est mis en présence d'hydrogène et d'au moins un agent de sulfuration choisi de préférence parmi l'hydrogène sulfuré, le soufre élémentaire, le CS₂, les mercaptans, les sulfures et/ou polysulfures, les coupes hydrocarbonées à point d'ébullition inférieur à 400 °C contenant des composés soufrés.

14. Procédé d'activation selon la revendication précédente, **caractérisé par le fait que** l'agent de sulfuration est le disulfure de diméthyle.

15. Utilisation du catalyseur d'hydrotraitement activé par un procédé selon la revendication 13 ou 14, pour l'hydrotraitement et/ou l'hydrocraquage d'hydrocarbures, en particulier d'hydrocarbures issus de coupes pétrolières de point d'ébullition compris entre 40 et 560°C.

## Patentansprüche

1. Hydrierungskatalysator, welcher einen Träger auf der Grundlage mindestens eines feuerfesten Oxids, mindestens eines Metalls aus der Gruppe VIII und mindestens eines Metalls aus der Gruppe VIB des Periodensystems der chemischen Elemente umfasst, **dadurch gekennzeichnet, dass** er außerdem mindestens eine organische Verbindung der allgemeinen Formel (I) umfasst, die mindestens zwei Carboxylester-Funktionen aufweist: 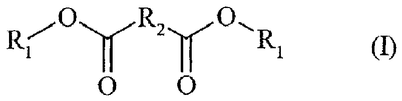 bei welcher die organische Verbindung der allgemeinen Formel (I) ein Dialkylsuccinat mit C₁₋₄ ist.

2. Katalysator nach Anspruch 1, **dadurch gekennzeichnet, dass** die organische Verbindung der allgemeinen Formel (I) Dimethylsuccinat ist.

3. Katalysator nach einem der Ansprüche 1 oder 2, **dadurch gekennzeichnet, dass** er mindestens 0,001 Mol von mindestens einer organischen Verbindung pro Mol der Metalle aus den Gruppe VIB und VIII enthält.

4. Katalysator nach Anspruch 3, **dadurch gekennzeichnet, dass** er 0,001 bis 10 Mol von mindestens einer organischen Verbindung pro Mol der Metalle aus den Gruppen VIB und VIII enthält.

5. Verfahren zur Herstellung eines Hydrierungskatalysators nach einem der vorhergehenden Ansprüche, welches das Kontaktieren eines Katalysators, welcher einen Träger auf der Grundlage mindestens eines feuerfesten Oxids, mindestens ein Metall aus der Gruppe VIII im Oxidzustand und mindestens ein Metall aus der Gruppe VIB im Oxidzustand umfasst, mit mindestens einer organischen Verbindung der allgemeinen Formel (I) 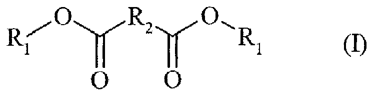 bei welcher die organische Verbindung der allgemeinen Formel (I) aus einem Dialkylsuccinat mit C₁₋₄ gewählt ist, umfasst.

6. Herstellungsverfahren nach Anspruch 5, **dadurch gekennzeichnet, dass** der Katalysator, welcher einen Träger auf der Grundlage von mindestens einem feuerfesten Oxid, mindestens ein Metall aus der Gruppe VIII im Oxidzustand und mindestens ein Metall aus der Gruppe VIB im Oxidzustand umfasst, ein regenerierter Katalysator ist.

7. Herstellungsverfahren nach Anspruch 5 oder 6, wobei sich an die Kontaktierung mindestens ein Reifungsschritt bei einer Temperatur anschließt, die im Allgemeinen 0 bis 100 °C beträgt, deren Dauer zwischen einigen Minuten und einigen Jahren beträgt, wobei sich an den Reifungsschritt gegebenenfalls mindestens ein Schritt zur Wärmebehandlung bei einer Temperatur von 50 bis 250 °C und mit einer Dauer von einigen Minuten bis mehreren Tagen anschließt.

8. Herstellungsverfahren nach einem der Ansprüche 5 bis 7, **dadurch gekennzeichnet, dass** die Kontaktierung des Katalysators mit der Verbindung bzw. den Verbindungen der allgemeinen Formel (I) in Anwesenheit von mindestens einem Lösungsmittel und/oder mindestens einer Säure stattfindet.

9. Herstellungsverfahren nach dem vorhergehenden Anspruch, **dadurch gekennzeichnet, dass** die organische Verbindung bzw. die organischen Verbindungen der allgemeinen Formel (I) zumindest teilweise in dem verwendeten Lösungsmittel löslich ist bzw. sind.

10. Herstellungsverfahren nach Anspruch 8 oder 9, **dadurch gekennzeichnet, dass** das Lösungsmittel aus der Gruppe gewählt ist, die Wasser, Toluol und Xylole, Ethylenglykol, Diethylenglykol, Triethylenglykol, Glycerin, Ethanol, tert.-Butanol, Polyethylenglykol (PEG), - am ehesten mit einem Molekulargewicht von 118 (Triethylenglykol) bis 1000 - , White Spirit und Petrolether umfasst.

11. Herstellungsverfahren nach einem der Ansprüche 5 bis 10, **dadurch gekennzeichnet, dass** die Kontaktierung des Katalysators mit der Verbindung bzw. den Verbindungen der allgemeinen Formel (I) *ex situ* außerhalb eines Hydrierungsreaktors erfolgt.

12. Herstellungsverfahren nach einem der Ansprüche 5 bis 11, **dadurch gekennzeichnet, dass** die Kontaktierung des Katalysators mit der Verbindung bzw. den Verbindungen der allgemeinen Formel (I) in Anwesenheit von Wasserstoff und von mindestens einem Sulfidierungsmittel stattfindet, das vorzugsweise aus der Gruppe gewählt wird, die Schwefelwasserstoff, elementaren Schwefel, CS₂, Mercaptane, Sulfide und/oder Polysulfide, und Schwefelverbindungen enthaltende Kohlenwasserstoff-Fraktionen mit einem Siedepunkt von weniger als 400 °C umfasst, allgemein im Inneren eines Hydrierungsreaktors.

13. Verfahren zur Aktivierung eines Hydrierungskatalysators nach einem der Ansprüche 1 bis 4 *in situ* oder *ex situ,* **dadurch gekennzeichnet, dass** der Katalysator in Gegenwart von Wasserstoff und von mindestens einem Sulfidierungsmittel gebracht wird, das vorzugsweise aus der Gruppe gewählt wird, die Schwefelwasserstoff, elementaren Schwefel, CS₂, Mercaptane, Sulfide und/oder Polysulfide, und Schwefelverbindungen enthaltende Kohlenwasserstoff-Fraktionen mit einem Siedepunkt von weniger als 400 °C umfasst.

14. Verfahren zur Aktivierung nach dem vorhergehenden Anspruch, **dadurch gekennzeichnet, dass** das Sulfidierungsmittel Dimethyl-Disulfid ist.

15. Verwendung des Hydrierungskatalysators, der mit einem Verfahren nach Anspruch 13 oder 14 aktiviert ist, zur Hydrierung und/oder zur Hydrocrackbehandlung von Kohlenwasserstoffen, insbesondere von Kohlenwasserstoffen, die aus einer Erdölfraktion mit einem Siedepunkt stammen, der zwischen 40 und 560 °C liegt.

## Claims

1. A hydroprocessing catalyst comprising a carrier based on at least one refractory oxide, at least one metal of group VIII and at least one metal of group VIB of the Periodic Table of Elements, **characterized in that** it also comprises at least one organic compound, comprising at least two carboxylic ester functions, of formula (I) 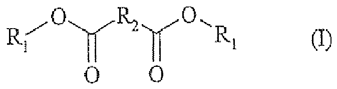 in which the organic compound is a C₁-C₄ dialkyl succinate.

2. The catalyst as claimed in claim 1, **characterized in that** the organic compound of formula (I) is dimethyl succinate.

3. The catalyst as claimed in one of claims 1 or 2, **characterized in that** it comprises at least 0.001 mol of at least one organic compound per mole of metals of groups VIB and VIII.

4. The catalyst as claimed in claim 3 **characterized in that** it comprises from 0.001 to 10 mol of at least one organic compound per mole of metals of groups VIB and VIII.

5. A method for preparing a hydroprocessing catalyst as claimed in one of the preceding claims, comprising bringing a catalyst comprising a carrier based on at least one refractory oxide, at least one metal of group VIII in the oxide state and at least one metal of group VIB in the oxide state into contact with at least one organic compound of formula (I) 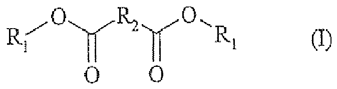 in which the organic compound is a C₁-C₄ dialkyl succinate.

6. The method of preparation as claimed in claim 5, **characterized in that** the catalyst comprising a carrier based on at least one refractory oxide, at least one metal of group VIII in the oxide state and at least one metal of group VIB in the oxide state is a regenerated catalyst.

7. The method of preparation as claimed in claim 5 or 6, such that the bringing into contact is followed by at least one maturation step, at a temperature generally of from 0 to 100°C, the duration of which is between a few minutes and a few years, said maturation step being optionally followed by at least one heat treatment step, at a temperature of from 50 to 250°C, and lasting from a few minutes to several days.

8. The method of preparation as claimed in one of claims 5 to 7, **characterized in that** the catalyst is brought into contact with the compound(s) of formula (I) in the presence of at least one solvent and/or of at least one acid.

9. The method of preparation as claimed in the preceding claim, **characterized in that** the organic compound(s) of formula (I) is (are) at least partially soluble in the solvent used.

10. The method of preparation as claimed in claim 8 or 9, **characterized in that** the solvent is selected from water, toluene, xylenes, ethylene glycol, diethylene glycol, triethylene glycol, glycerol, ethanol, tert-butanol, polyethylene glycol (PEG), most commonly of molecular weight from 118 (triethylene glycol) to 1000, white spirit and petroleum ether.

11. The method of preparation as claimed in one of claims 5 to 10, **characterized in that** the catalyst is brought into contact with the compound(s) of formula (I) ex *situ,* outside the hydroprocessing reactor.

12. The method of preparation as claimed in one of claims 5 to 11, **characterized in that** the catalyst is brought into contact with the compound(s) of formula (I) in the presence of hydrogen and of at least one sulfurization agent preferably selected from hydrogen sulfide, elemental sulfur, CS₂, mercaptans, sulfides and/or polysulfides, and hydrocarbon fractions with a boiling point of less than 400°C containing sulfur compounds, generally in a hydroprocessing reactor.

13. A method for the *in situ* or ex *situ* activation of a hydroprocessing catalyst as claimed in any one of claims 1 to 4, **characterized in that** said catalyst is placed in the presence of hydrogen and of at least one sulfurization agent preferably selected from hydrogen sulfide, elemental sulfur, CS₂, mercaptans, sulfides and/or polysulfides, and hydrocarbon fractions with a boiling point of less than 400°C containing sulfur compounds.

14. The method of activation as claimed in the preceding claim, **characterized in that** the sulfurization agent is dimethyl disulfide.

15. The use of the hydroprocessing catalyst activated by means of a method as claimed in claim 13 or 14, for the hydroprocessing and/or hydrocracking of hydrocarbons, in particular of hydrocarbons derived from petroleum fractions with a boiling point of between 40 and 560°C.
